# EUROPÄISCHE PATENTSCHRIFT

(11) **EP 2 830 178 B1**
(45) Veröffentlichungstag und Bekanntmachung des Hinweises auf die Patenterteilung: **02.12.2015**
(21) Anmeldenummer: 14171711.6
(22) Anmeldetag: 10.06.2014
(51) Int. Cl.: H02H 7/085, H02H 9/02, H02H 5/04, H02P 29/00, H02P 29/02

(54) **Schaltung zum thermischen Schutz und zur Leistungsregelung von Elektromotoren**
Circuit for thermal protection and for power control of electric motors
Circuit de protection thermique et de régulation de puissance de moteurs électriques

(30) Priorität: 22.07.2013 DE 102013107819
(43) Veröffentlichungstag der Anmeldung: 28.01.2015
(73) Patentinhaber: ebm-papst Mulfingen GmbH & Co. KG, 74673 Mulfingen (DE)
(72) Erfinder: Sauer, Thomas, 97980 Bad Mergentheim (DE)
(74) Vertreter: Peter, Julian

(56) Entgegenhaltungen:
- EP-A1- 0 915 550
- DE-A1- 1 513 095
- GB-A- 865 649
- US-A- 5 604 476

## Beschreibung

Die vorliegende Erfindung betrifft eine Schaltung zum thermischen Schutz und zur Leistungsregelung in Abhängigkeit von einer aktuellen Wicklungstemperatur von Strangwicklungen eines Elektromotors, umfassend einerseits einen die Wicklungstemperatur der Strangwicklungen messenden Temperaturwächter-Schalter, der bei Erreichen einer bestimmten Wicklungstemperatur, der Schalttemperatur, ein Abschalten eines durch die Wicklungen fließenden Wicklungsstromes bewirkt, sowie einen den Strangwicklungen zugeordneten temperaturabhängigen Widerstand, der bei Erreichen einer bestimmten Wicklungstemperatur durch eine erfolgte Widerstandserhöhung eine Leistungsminderung der Motorleistung bewirkt.

Der Schutz eines dreisträngigen Elektromotors vor thermischer Überlastung wird bekannterweise durch drei Temperaturwächter-Schalter, wobei es sich vorzugsweise um Bimetall-Schalter handelt, erreicht. Die Temperatur jedes Motorstranges wird mit einem eigenen Temperaturwächter abgetastet, um auch unsymmetrische Temperaturerhöhungen, z. B. durch einen Wicklungsisolationsschaden erfassen zu können. Die drei Temperaturwächter-Schalter werden in Reihe geschaltet. Bei Überschreitung der Schalttemperatur eines der Temperaturwächter-Schalter öffnet dieser. Die Unterbrechung wird in einer Auswertelektronik erkannt und die für das jeweilige Schutzkonzept notwendige Aktion ausgelöst. Dies ist typischerweise das Abschalten des durch die Strangwicklungen fließenden Wicklungsstroms. Weiterhin ist es bekannt, hierbei einen temperaturabhängigen Widerstand vorzusehen, über den eine Strangwicklungsabhängige Leistungsregelung erfolgen kann. Der mit der Temperatur steigende Widerstandswert des temperaturabhängigen Widerstandes wird zur Messung der aktuellen Wicklungstemperatur benutzt, indem z. B. der Spannungsabfall über den temperaturabhängigen Widerstand bei Einprägen eines Konstantstromes gemessen wird. Bei zu hoher Temperatur wird die Leistung an den Motor reduziert. Auf Grund der Annahme, dass bei ordnungsgemäßer Funktion des Motors die Temperaturen in den drei Wicklungssträngen ungefähr gleich sind, wird nur ein temperaturabhängiger Widerstand eingesetzt, um den Aufwand zu reduzieren. Um die Reihenschaltung der drei Temperaturwächter-Schalter durch eine Auswertelektronik auswerten zu können, werden zwei Verbindungen in die Signalelektronik benötigt. Ebenso werden für die Auswertung des temperaturabhängigen Widerstandes durch die Auswertelektronik zwei Verbindungen zur Elektronik benötigt. Also sind insgesamt vier Verbindungen zwischen dem Elektromotor und der Auswertelektronik erforderlich. Hieraus ergibt sich ein erhöhter Schaltungs- und Bauteilaufwand.

Aus der EP 0 915 550 A1 sind Steuermittel zum thermischen Schutz eines Motors bekannt, die zum Steuern der Energiezufuhr zu den Motorstrangwicklungen ausgebildet sind. Die Steuermittel umfassen Temperaturschalter, die in thermischer aber nicht in elektrischer Verbindung mit den Strangwicklungen stehen. Des Weiteren umfassen die Steuermittel ein Schütz, wobei die Schützspule mit den Temperaturschaltern in Reihe geschaltet ist und die Schaltschütze derart angeordnet sind, dass die Energiezufuhr zu den Motorwicklungen unterbrochen wird, sobald die Schützspule durch Öffnen des Temperaturschalters nicht mehr mit Strom versorgt wird.

Die US 5 604 476 A offenbart eine Schutzvorrichtung für einen Motor, aufweisend an den Strangwicklungen angeordnete Temperatursensoren, z.B. PTC-Widerstände, eine mit den Temperatursensoren verbundene Auswerte- und Steuereinheit sowie einen mit der Auswerte- und Steuereinheit verbundenen Steuerkreis. Der Steuerkreis umfasst einen temperaturabhängigen Widerstand, der mittels einer Springfeder gegen einen Bimetallstreifen vorgespannt ist. Im Fall einer mit den Temperatursensoren gemessenen Temperaturüberschreitung in den Wicklungen versorgt die Auswerte- und Steuereinheit den temperaturabhängigen Widerstand im Steuerkreis mit einer Spannung. Dies führt zur Erwärmung des temperaturabhängigen Widerstands, der seinerseits den Bimetallstreifens erwärmt, bis dieser umschaltet, wodurch Kontaktbrücken öffnen und die Energiezufuhr zum Motor unterbrochen wird.

In der DE 15 13 095 A1 ist eine Schaltungsanordnung mit NTC- oder PTC-Halbleiterfühlern zum Schutz von elektrischen Vorrichtungen gegen Übertemperatur offenbart. Im Stromkreis der Halbleiterfühler ist ein Relais vorgesehen, das aus einer Schaltröhre, aus einer Wicklung zum Steuern der Schaltröhre, sowie aus einem Permanentmagneten zum Einschalten der Schaltröhre besteht Dabei kehrt der Permanentmagnet nach Einschaltung in seine Ausgangslage zurück.

Aus der GB 865 649 A ist ein Temperaturschutz-System für Elektromotoren bekannt, aufweisend an den Motorwicklungen angeordnete, in Reihe geschaltete PTC Widerstände sowie hierzu in Reihe geschaltet ein Relais und eine Spannungsquelle. Das System weist zudem einen Hauptschalter mit mehreren Kontaktschaltern auf, die beim Schalten des Relais infolge des Überschreitens eines bestimmten Temperaturwerts öffnen und die Energiezufuhr zum Motor unterbrechen.

Der Erfindung liegt die Aufgabe zu Grunde, den Schaltungsaufwand für die thermische Überwachung und Leistungsregelung von Elektromotoren zu verringern. Erfindungsgemäß wird dies dadurch erreicht, dass bei dem zu überwachenden Elektromotor mit mehreren Strangwicklungen einer der Strangwicklungen der temperaturabhängigen Widerstand zugeordnet ist und der anderen Strangwicklung bzw. den anderen Strangwicklungen jeweils ein Temperaturwächter-Schalter zugeordnet ist wobei der temperaturabhängige Widerstand und der bzw. die Temperaturwächter-Schalter in Reihe geschaltet an einer Spannungsquelle angeschlossen sind.

Hierbei ist es erfindungsgemäß weiterhin von Vorteil, wenn die Reihenschaltung aus dem temperaturabhängigen Widerstand und dem Temperaturwächter-Schalter an einer Auswertelektronik derart angeschlossen ist, dass der Reihenschaltung ein Konstantstrom eingeprägt und ein Spannungsabfall über der Reihenschaltung gemessen wird und entsprechend der Höhe des Spannungsabfalls die Motorleistung verringert oder der Motorstrom unterbrochen wird.

Erfindungsgemäß kann weiterhin jeder Wicklungsstrang getrennt auf thermische Überlast abgetastet und zusätzlich mit der gleichen Schaltung die aktuelle Temperatur eines Wicklungsstrangs gemessen werden. Der temperaturabhängige Widerstand dient erfindungsgemäß sowohl zur Temperaturregelung als auch zur Abschaltung bei Übertemperatur. Die Auswertung für den Übertemperaturschutz erfolgt beispielsweise derart, dass die Auswertelektronik bei Erreichen eines von der Auswahl des jeweiligen temperaturabhängigen Widerstandes und der Höhe des Konstantstromes abhängigen Spannungswertes die Abschaltung des Elektromotors durch die Auswertelektronik bewirkt. Wenn bei der erfindungsgemäßen Schaltung sich die Temperatur erhöht, erhöht sich auch der Widerstand des temperaturabhängigen Widerstands.

Wird die Spannung über der Reihenschaltung aus zwei Temperaturwächter-Schaltern und dem temperaturabhängigen Widerstand zu hoch, schaltet die Auswertelektronik den Elektromotor ab. Falls einer der beiden Temperaturwächter-Schalter vor Erreichen der Spannungsschaltschwelle des temperaturabhängigen Widerstandes seine Abschalttemperatur erreicht, öffnet der jeweilige Temperaturwächter-Schalter und die Spannung über der Reihenschaltung erreicht ihren maximalen Wert, d. h. einen Wert auf jeden Fall oberhalb der Abschaltschwelle des temperaturabhängigen Widerstands. Der Motor wird abgeschaltet. Erfindungsgemäß ist es ebenfalls möglich, wenn vor Erreichen der Abschalttemperatur der Temperaturwächter-Schalter der Widerstandswert des temperaturabhängigen Widerstands gemessen wird und so die aktuelle Temperatur bestimmt werden kann. Auf Grund der erfindungsgemäßen Schaltung ist, wenn ein Temperaturschalter öffnet, die Auswertung der Temperatur nicht mehr nötig, da mit Öffnen des Temperaturwächter-Schalters der Motor stillgesetzt wird. Beim Abkühlen des Elektromotors wird der jeweilige Temperaturwächter-Schalter, der geöffnet ist, wieder eingeschaltet. Die Elektronik erkennt den Spannungswert an der erfindungsgemäßen Reihenschaltung, der nun unterhalb der Abschaltschwelle liegt, und setzt den Motor wieder in Betrieb. Erfindungsgemäß sind demnach nur insgesamt zwei Verbindungen zu der Auswertelektronik notwendig. Es ist somit erfindungsgemäß auch nur ein Schaltungsteil erforderlich und nicht zwei unterschiedliche Auswerteschaltungen. Zudem wird erfindungsgemäß ein Temperaturwächter-Schalter eingespart.

Vorteilhafte Ausführungen der Erfindung sind in den Unteransprüchen enthalten und werden an Hand des in der beiliegenden Zeichnung dargestellten Ausführungsbeispiels näher erläutert. Es zeigt:

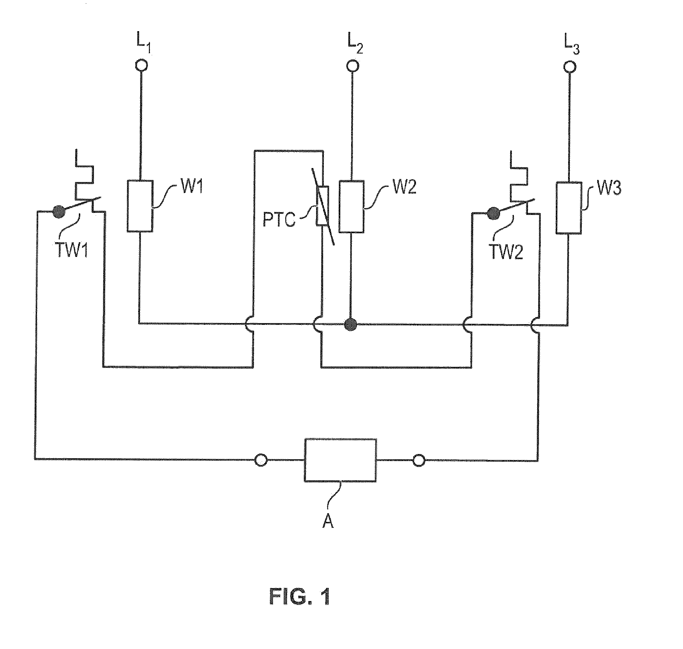

- Fig. 1: das Anschlussbild eines Elektromotors.

Sofern bestimmte beschriebene und/oder aus der Zeichnung entnehmbare Merkmale der erfindungsgemäßen Schaltung oder ihrer Bestandteile nur im Zusammenhang mit einem oder mehreren anderen Merkmalen beschrieben sind, sind diese aber auch gemäß der Erfindung unabhängig von diesem Ausführungsbeispiel als Einzelmerkmal oder aber auch in Kombination mit anderen Merkmalen des Ausführungsbeispiels wesentlich und werden als zur Erfindung gehörig beansprucht.

In Fig. 1 ist das Anschlussbild eines Elektromotors mit drei Motorwicklungen W1, W2 und W3 dargestellt, die über die Leitungen L1 bis L3 an eine Spannungsversorgung angeschlossen sind. Der Motor wird hier beispielsweise in Sternschaltung betrieben.

Den Wicklungen sind Temperaturwächter TW1 und TW2 sowie ein temperaturabhängiger Widerstand PTC zugeordnet, die in Reihenschaltung in beliebiger Reihenfolge miteinander verbunden sind. Beim temperaturabhängigen Widerstand PTC handelt es sich insbesondere um einen PTC-Widerstand.

Die Enden dieser Reihenschaltung sind an eine Auswerteschaltung A angeschlossen.

Durch die Auswerteschaltung kann jeder Wicklungsstrang getrennt auf thermische Überlast abgetastet werden und zusätzlich kann mit der gleichen Schaltung die aktuelle Temperatur eines Wicklungsstranges gemessen werden. Der temperaturabhängige Widerstand PTC dient dann sowohl zur Temperaturregelung als auch zur Abschaltung bei Übertemperatur dieses Stranges. Die Auswertung für den Übertemperaturschutz erfolgt beispielsweise derart, dass die auswertende Elektronik in die Reihenschaltung aus zwei Temperaturwächtern TW1 und TW2 und eines temperaturabhängigen Widerstandes PTC einen Konstantstrom einprägt und den Spannungsabfall über der Reihenschaltung misst.

Bei Erreichen eines von der Auswahl des temperaturabhängigen Widerstandes PTC und der Höhe des Konstantstromes abhängigen Spannungswertes erfolgt die Abschaltung des Motors durch die Signalelektronik.

Bei steigender Temperatur erhöht sich der Widerstandswert des temperaturabhängigen Widerstandes PTC. Wird die Spannung über der Reihenschaltung aus den zwei Temperaturwächtern TW1 und TW2 und des temperaturabhängigen Widerstandes PTC zu hoch, schaltet die Elektronik den Motor ab. Falls einer der beiden Temperaturwächter TW1, TW2 vor Erreichen der Spannungsschaltschwelle des temperaturabhängigen Widerstandes PTC seine Abschalttemperatur erreicht, öffnet dieser Temperaturwächter TW1, TW2, und die Spannung über der Reihenschaltung wird maximal, d. h. auf jeden Fall oberhalb der Abschaltschwelle des temperaturabhängigen Widerstandes PTC. Der Motor wird abgeschaltet.

Vor Erreichen der Abschalttemperatur der Temperaturwächter TW1, TW2 kann der Widerstandswert des temperaturabhängigen Widerstandes PTC gemessen und so die aktuelle Temperatur bestimmt werden.

Falls einer der Temperaturwächter TW1, TW2 geöffnet hat, ist die Auswertung der Temperatur nicht mehr nötig, da mit dem Öffnen der Motor stillgesetzt wird. Bei Abkühlen des Motors wird dieser Temperaturwächter TW1, TW2 wieder einschalten. Die Elektronik erkennt den Spannungswert unterhalb der Abschaltschwelle und setzt den Motor wieder in Betrieb.

Es ist noch darauf hinzuweisen, dass es auf Grund der Wickeltechnik des Motors oft nicht erforderlich ist, für jede Wicklung einen Temperatursensor vorzusehen. Die Wicklungen liegen in vielen Fällen so dicht beieinander, dass ein Temperaturwächter von zwei Wicklungen beaufschlagt wird und nach Erreichen der Abschalttemperatur die Versorgungsspannung des Motors unterbricht.

Die Erfindung, wie in den beiliegenden Ansprüchen definiert, ist nicht auf das dargestellte und beschriebene Ausführungsbeispiel beschränkt, sondern umfasst auch alle im Sinne der Erfindung gleich-wirkenden Ausführungen.

## Patentansprüche

1. Schaltung zum thermischen Schutz und zur Leistungsregelung eines Elektromotors in Abhängigkeit von einer aktuellen Wicklungstemperatur von Strangwicklungen des Elektromotors, umfassend einerseits mindestens einen die Wicklungstemperatur der Strangwicklungen messenden Temperaturwächter-Schalter (TW1, TW2), der bei Erreichen einer bestimmten Wicklungstemperatur, der Schalttemperatur, ein Abschalten eines durch die Wicklungen fließenden Wicklungsstromes bewirkt, sowie einen den Strangwicklungen zugeordneten temperaturabhängigen Widerstand (PTC), der bei Erreichen einer bestimmten Wicklungstemperatur durch eine erfolgte Widerstandserhöhung eine Leistungsminderung der Motorleistung bewirkt bzw. den Motor abschaltet,
**dadurch gekennzeichnet, dass** einer der Strangwicklungen der temperaturabhängigen Widerstand (PTC) zugeordnet ist, und den anderen Strangwicklungen bzw. der anderen Strangwicklung jeweils ein Temperaturwächter-Schalter (TW1, TW2) zugeordnet ist, wobei der temperaturabhängige Widerstand (PTC) und der Temperaturwächter-Schalter (TW1, TW2) bzw. die Temperaturwächter-Schalter (TW1, TW2) in Reihe geschaltet an einer Spannungsquelle angeschlossen sind.

2. Schaltung nach Anspruch 1,
**dadurch gekennzeichnet, dass** die Reihenschaltung aus temperaturabhängigem Widerstand (PTC) und Temperaturwächter-Schalter (TW1, TW2) an eine Auswertelektronik (A) angeschlossen ist, mittels der der Reihenschaltung ein Konstantstrom einprägbar ist und ein Spannungsabfall über der Reihenschaltung messbar ist, und entsprechend der Höhe des Spannungsabfalls die Motorleistung verringert oder der Motorstrom unterbrochen werden kann.

3. Schaltung nach Anspruch 2,
**dadurch gekennzeichnet, dass**
der mindestens eine Temperaturwächter-Schalter (TW1, TW2) jeweils derart ausgebildet ist, dass er bei Erreichen seiner Abschalttemperatur öffnet, wobei die Spannung über der Reihenschaltung einen maximalen, oberhalb einer Abschaltschwelle des temperaturabhängigen Widerstands (PCT) liegenden Wert erreicht, und
dass mittels der Auswertelektronik (A) entsprechend dem über der Reihenschaltung gemessenen maximalen Spannungsabfall der Motorstrom unterbrochen werden kann.

4. Schaltung nach einem der Ansprüche 1 bis 3,
**dadurch gekennzeichnet, dass** mittels der Auswertelektronik (A) durch Messung des Spannungsabfalls über dem temperaturabhängigen Widerstand (PTC) die aktuelle Temperatur im Wicklungsstrang erfassbar ist.

5. Schaltung nach einem der Ansprüche 1 bis 4,
**dadurch gekennzeichnet, dass**
die Schaltung derart ausgebildet ist, dass nach dem Abschalten des Motorstroms und nach Abkühlen des Elektromotors unter die Abschalttemperatur des jeweiligen Temperaturwächter-Schalters (TW1, TW2), der die Abschaltung bewirkt hat, dieser wieder sich einschaltet und mittels der Auswertelektronik ein Spannungsabfall über der Reihenschaltung gemessen wird, der unterhalb des Abschaltschwellwertes liegt, und der Motorstrom wieder eingeschaltet wird.

6. Schaltung nach einem der Ansprüche 1 bis 5,
**dadurch gekennzeichnet, dass** die Reihenschaltung aus zwei Temperaturwächter-Schaltern (TW1, TW2) und dem temperaturabhängigen Widerstand (PTC) besteht, wobei vorzugsweise der temperaturabhängige Widerstand (PTC) zwischen den beiden Temperaturwächter-Schaltern (TW1, TW2) innerhalb der Reihenschaltung angeordnet ist.

7. Schaltung nach einem der Ansprüche 1 bis 6,
**dadurch gekennzeichnet, dass** der temperaturabhängige Widerstand (PTC) ein PTC-Widerstand ist.

8. Verwendung einer Schaltung nach einem der vorhergehenden Ansprüche,
**dadurch gekennzeichnet, dass** die Reihenschaltung aus temperaturabhängigem Widerstand (PTC) und Temperaturwächter-Schalter (TW1, TW2) an die Auswertelektronik (A) angeschlossen ist, und mittels der Auswerteelektronik (A) der Reihenschaltung ein Konstantstrom eingeprägt wird und ein Spannungsabfall über der Reihenschaltung gemessen wird, und entsprechend der Höhe des Spannungsabfalls die Motorleistung verringert wird oder der Motorstrom unterbrochen wird.

9. Verwendung einer Schaltung nach Anspruch 8,
**dadurch gekennzeichnet, dass** bei Erreichen der Abschalttemperatur eines der Temperaturwächter-Schalter (TW1, TW2) der Temperaturwächter-Schalter (TW1, TW2) öffnet und mittels der Auswertelektronik (A) und entsprechend dem über der Reihenschaltung gemessenen maximalen Spannungsabfall der Motorstrom unterbrochen wird.

10. Verwendung einer Schaltung nach Anspruch 8 oder 9,
**dadurch gekennzeichnet, dass** mittels der Auswertelektronik (A) durch Messung des Spannungsabfalls über dem temperaturabhängigen Widerstand (PTC) die aktuelle Temperatur im Wicklungsstrang erfasst wird.

11. Verwendung einer Schaltung nach einem der Ansprüche 8 bis 10,
**dadurch gekennzeichnet, dass** nach dem Abschalten des Motorstroms und nach Abkühlen des Elektromotors unter die Abschalttemperatur des jeweiligen Temperaturwächter-Schalters (TW1, TW2), der die Abschaltung bewirkt hat, dieser wieder sich einschaltet und mittels der Auswertelektronik ein Spannungsabfall über der Reihenschaltung gemessen wird, der unterhalb des Abschaltschwellwertes liegt, und der Motorstrom wieder eingeschaltet wird.

## Claims

1. A circuit for thermal protection and power regulation as a function of a current winding temperature of phase windings of an electric motor, comprising at least one temperature monitor switch (TW1, TW2) measuring the winding temperature of the phase windings which, upon attainment of a specific winding temperature defining a switching temperature, shuts off the winding current flowing through the windings, and a thermistor (PTC), which is associated with the phase windings and which, upon attainment of a specific winding temperature, reduces the power of the motor by increasing the resistance, or shuts the motor off, **characterized in that** one of the phase windings is associated with the temperature depending thermistor (PTC) and one temperature monitor switch (TW1, TW2) is associated with each other phase winding or phase windings, wherein the temperature depending thermistor (PTC) and the temperature monitor switch (TW1, TW2) and the temperature monitor switches (TW1, TW2), respectively, are connected in a series circuit to a voltage source.

2. Circuit according to Claim 1, **characterized in that** the series circuit of the temperature depending thermistor (PTC) and the temperature monitor switch (TW1, TW2) are connected to evaluation electronics (A) in such a way that a constant current is applied through the series circuit, the evaluation electronics is configured for measuring a voltage drop across the series connection, and the power to the motor is reduced or the motor current is interrupted according to the value of the voltage drop.

3. Circuit according to Claim 2, **characterized in that** upon reaching a cut-off temperature of the temperature monitor switch (TW1, TW2), the temperature monitor switch opens, wherein the current on the series circuit reaches a maximum value above the cut-off threshold value of the temperature depending thermistor (PTC), and the motor current is interrupted by means of the evaluation electronics (A) in accordance with a maximum voltage drop measured across the series circuit.

4. Circuit according to one of claims 1 to 3, **characterized in that** the current temperature in the phase winding is determined by measurement of the voltage drop across the temperature depending thermistor (PTC) using the evaluation electronics (A).

5. Circuit according to one of claims 1 to 4, **characterized in that** the circuit is configured such that, after the motor is shut-off and upon cooling of the electric motor below a cut-off temperature of the temperature monitor switch (TW1, TW2) that caused the shut-down, the temperature monitor switch is again closed and, by means of the evaluation electronics (A), a voltage drop across the series circuit below the cut-off threshold value is measured and the motor current is again turned on.

6. Circuit according to one of claims 1 to 5, **characterized in that** the series circuit consists of two of the temperature monitor switches (TW1, TW2) and the temperature depending thermistor (PTC), wherein preferably the temperature depending thermistor (PTC) is positioned between the two temperature monitor switches (TW1, TW2) within the series circuit.

7. Circuit according to one of claims 1 to 6, **characterized in that** the temperature depending thermistor (PTC) is a positive temperature coefficient resistor.

8. Use of a circuit according to one of the preceding claims, **characterized in that** the series circuit of the temperature depending thermistor (PTC) and the temperature monitor switch (TW1, TW2) are connected to evaluation electronics (A) in such a way that a constant current is applied through the series circuit, the evaluation electronics measures a voltage drop across the series connection, and the power to the motor is reduced or the motor current is interrupted according to the value of the voltage drop.

9. Use of a circuit according to claim 8, **characterized in that** upon reaching the cut-off temperature of a temperature monitor switch (TW1, TW2), the temperature monitor switch (TW1, TW2) opens, and the motor current is interrupted by means of the evaluation electronics (A) in accordance with a maximum voltage drop measured across the series circuit.

10. Use of a circuit according to claim 8 or 9, **characterized in that** the current temperature in the phase winding is determined by measurement of the voltage drop across the temperature depending thermistor (PTC) using the evaluation electronics (A).

11. Use of a circuit according one of the claims 8 to 10, **characterized in that** after the motor is shut-off and upon cooling of the electric motor below a cut-off temperature of the temperature monitor switch (TW1, TW2) that caused the shut-down, the temperature monitor switch is again closed and, by means of the evaluation electronics (A), a voltage drop across the series circuit below the cut-off threshold value is measured and the motor current is again turned on.

## Revendications

1. Circuit de protection thermique et de régulation de la puissance d'un moteur électrique en fonction d'une température de bobinage actuelle de bobinages en écheveau dudit moteur électrique, comprenant d'une part au moins un interrupteur de contrôleur de température (TW1, TW2) mesurant la température de bobinage desdits bobinages en écheveau, qui entraîne une coupure du courant de bobinage circulant dans les bobinages lorsqu'une température de bobinage précise, la température de computation, est atteinte, et d'autre part une résistance en fonction de la température (PTC) affectée auxdits bobinages en écheveau, qui entraîne une réduction de la puissance du moteur ou la coupure du moteur en augmentant la résistance lorsqu'une température de bobinage précise est atteinte, **caractérisé en ce que** la résistance en fonction de la température (PTC) est affectée à un desdits bobinages en écheveau et qu'un interrupteur de contrôleur de température (TW1, TW2) est affecté respectivement aux autres bobinages en écheveau ou à l'autre bobinage en écheveau, ladite résistance en fonction de la température (PTC) et ledit interrupteur de contrôleur de température (TW1, TW2) ou les interrupteurs de contrôleur de température (TW1, TW2) étant branchés montés en série à une source de tension.

2. Circuit selon la revendication 1, **caractérisé en ce que** le circuit en série composé d'une résistance en fonction de la température (PTC) et d'un interrupteur de contrôleur de température (TW1, TW2) est branché à une électronique d'évaluation (A), au moyen de laquelle un courant constant peut être délivré audit circuit en série et une chute de tension est mesurable sur ledit circuit en série, et la puissance du moteur peut être diminuée ou le courant du moteur interrompu selon le niveau de ladite chute de tension.

3. Circuit selon la revendication 2, **caractérisé en ce qu'**au moins un interrupteur de contrôleur de température (TW1, TW2) est respectivement conçu de telle sorte qu'il s'ouvre lorsque sa température de coupure est atteinte, la tension sur le circuit en série atteignant une valeur maximale située au-dessus d'un seuil de coupure de la résistance en fonction de la température (PTC), et qu'il peut interrompre le courant du moteur selon la chute de tension maximale mesurée sur ledit circuit en série au moyen de l'électronique d'évaluation (A).

4. Circuit selon l'une des revendications 1 à 3, **caractérisé en ce que** la température actuelle dans le faisceau de bobinage peut être saisie au moyen de l'électronique d'évaluation (A) en mesurant la chute de tension sur la résistance en fonction de la température (PTC).

5. Circuit selon l'une des revendications 1 à 4, **caractérisé en ce que** le circuit est conçu de telle sorte qu une fois le courant du moteur coupé et le moteur électrique refroidi en dessous de la température de coupure de l'interrupteur de contrôleur de température (TW1, TW2) respectif ayant provoqué la coupure, celui-ci se remet en marche et une chute de tension en dessous de la valeur de seuil de coupure est mesurée sur le circuit en série au moyen de l'électronique d'évaluation et le courant du moteur est rétabli.

6. Circuit selon l'une des revendications 1 à 5, **caractérisé en ce que** le circuit en série est constitué de deux interrupteurs de contrôleur de température (TW1, TW2) et de la résistance en fonction de la température (PTC), ladite résistance en fonction de la température (PTC) étant disposée de préférence entre les deux interrupteurs de contrôleur de température (TW1, TW2) à l'intérieur du circuit en série.

7. Circuit selon l'une des revendications 1 à 6, **caractérisé en ce que** la résistance en fonction de la température (PTC) est une résistance PTC.

8. Utilisation d'un circuit selon l'une des revendications précédentes, **caractérisée en ce que** le circuit en série constitué de la résistance en fonction de la température (PTC) et des interrupteurs de contrôleur de température (TW1, TW2) est raccordé à l'électronique d'évaluation (A), et au moyen de ladite électronique d'évaluation (A) un courant constant est délivré audit circuit en série et une chute de tension est mesurée sur ledit circuit en série, et la puissance du moteur est diminuée ou le courant du moteur interrompu selon le niveau de ladite chute de tension

9. Utilisation d'un circuit selon la revendication 8, **caractérisée en ce que**, lorsque la température de coupure d'un des interrupteurs de contrôleur de température (TW1, TW2) est atteinte, l'interrupteur de contrôleur de température (TW1, TW2) s'ouvre et le courant du moteur est coupé au moyen de l'électronique d'évaluation (A) et selon la chute de tension maximale mesurée sur le circuit en série.

10. Utilisation d'un circuit selon la revendication 8 ou 9, **caractérisée en ce que** la température actuelle dans le faisceau de bobinage est saisie au moyen de l'électronique d'évaluation (A) en mesurant la chute de tension sur la résistance en fonction de la température (PTC).

11. Utilisation d'un circuit selon l'une des revendications 8 à 10, **caractérisée en ce qu'**une fois le courant du moteur coupé et le moteur électrique refroidi en dessous de la température de coupure de l'interrupteur de contrôleur de température (TW1, TW2) respectif ayant provoqué la coupure, celui-ci se remet en marche et une chute de tension en dessous de la valeur de seuil de coupure est mesurée sur le circuit en série au moyen de l'électronique d'évaluation et le courant du moteur est rétabli.
